# EUROPÄISCHE PATENTSCHRIFT

(11) **EP 3 042 339 B1**
(45) Veröffentlichungstag und Bekanntmachung des Hinweises auf die Patenterteilung: **12.12.2018**
(21) Anmeldenummer: 14741920.4
(22) Anmeldetag: 23.07.2014
(51) Int. Cl.: G06K 9/00

(54) **VERFAHREN UND STEUERGERÄT ZUM ERKENNEN EINES OBJEKTES IN EINER BILDINFORMATION**
METHOD AND CONTROL DEVICE FOR DETECTING AN OBJECT IN IMAGE INFORMATION
PROCÉDÉ ET DISPOSITIF DE COMMANDE POUR DÉTECTER UN OBJET DANS L' INFORMATION D'IMAGE

(30) Priorität: 06.09.2013 DE 102013217827
(43) Veröffentlichungstag der Anmeldung: 13.07.2016
(73) Patentinhaber: Robert Bosch GmbH, 70442 Stuttgart (DE)
(72) Erfinder: STUMBER, Tobias, 71277 Rutesheim (DE); BRUEGGERT, Steffen, 31141 Hildesheim (DE); ALAA EL-DIN, Omar, 30161 Hannover (DE); SCHWARZ, Christian, 71139 Ehningen (DE)
(86) Internationale Anmeldenummer: PCT/EP2014/065834
(87) Internationale Veröffentlichungsnummer: WO 2015/032544

(56) Entgegenhaltungen:
- EP-A2- 1 220 182
- EP-A2- 2 575 077
- US-A1- 2007 237 387
- US-A1- 2011 184 895

## Beschreibung

### Stand der Technik

Die vorliegende Erfindung bezieht sich auf ein Verfahren zum Erkennen eines Objekts in einer Bildinformation, auf ein entsprechendes Steuergerät sowie auf ein entsprechendes Computerprogrammprodukt.

Fahrerassistenzsysteme können Eingriffe an einem Fahrzeug sowie Empfehlungen für einen Fahrer des Fahrzeugs basierend auf erkannten Objekten im Umfeld des Fahrzeugs durchführen. Die Objekte können durch eine Kamera erfasst werden und in Bildinformationen der Kamera präsent sein.

Die DE 10 2006 044 595 84 beschreibt ein Verfahren und eine Bildverarbeitungsvorrichtung zur Segmentierung anhand von Konturpunkten in Echtzeit. Datenreduktion ermöglicht eine schnelle Verarbeitung.

Die EP 1 220182 A2 offenbart ein Gerät zur Bilderkennung. Dabei werden Umfeldparameter, wie eine aktuelle Uhrzeit oder das aktuelle Wetter berücksichtigt. Zum Erfassen der Umfeldparameter werden Geräte, wie eine Uhr, ein Kalender oder ein Sonnenlichtmesser eingesetzt.

Die US 2007/237387 A1 offenbart ein Verfahren zum Erkennen von Menschen in Bildern. Dabei wird ein Integralbild verwendet.

### Offenbarung der Erfindung

Vor diesem Hintergrund wird mit der vorliegenden Erfindung ein Verfahren zum Erkennen eines Objekts in einer Bildinformation, weiterhin ein Steuergerät, das dieses Verfahren verwendet sowie schließlich ein entsprechendes Computerprogrammprodukt gemäß den Hauptansprüchen vorgestellt.

Vorteilhafte Ausgestaltungen ergeben sich aus den jeweiligen Unteransprüchen und der nachfolgenden Beschreibung.

Unter wechselnden Bedingungen, wie beispielsweise wechselnder Helligkeit, wechselnder Sichtweite oder wechselndem Lichteinfallswinkel kann ein Objekt sehr verschieden von einer Kamera in einer Bildinformation abgebildet werden.

Um das Objekt in der Bildinformation sicher zu erkennen, kann das Objekt je nach gerade vorherrschender Bedingung mit angepassten Kriterien gesucht werden. Die verschiedenen Kriterien können in verschiedenen Merkmalsbeschreibungen repräsentiert sein. Die Merkmalsbeschreibungen können je nach Bedingung aus einer Palette von Merkmalsbeschreibungen ausgewählt und angewendet werden.

Der hier vorgestellte Ansatz kann als einfaches Beispiel an einem Leitpfosten verdeutlicht werden. Der Leitpfosten zeigt einem Betrachter einen weißen Grundkörper mit einer schwarz abgesetzten Binde sowie einen Reflektor. Bei Tageslicht kann der Leitpfosten in der Bildinformation aufgrund des Kontrasts zwischen seiner schwarzen Binde und seiner weißen Grundfarbe erkannt werden, während der Reflektor wenig optischen Reiz bereitstellt. Bei Dunkelheit kann der Leitpfosten in der Bildinformation jedoch vorwiegend aufgrund des vom Reflektor zurückgeworfenen Lichts erkannt werden, während der schwarz-weiß Kontrast nur auf geringste Entfernungen tatsächlich auffällig ist. Daher kann bei Tageslicht die Suche nach Leitpfosten in der Bildinformation basierend auf dem schwarz-weiß Kontrast durchgeführt werden. Bei Dunkelheit kann die Suche basierend auf einem reflektorcharakteristischen Leuchtmuster durchgeführt werden. Dadurch können Leitpfosten sowohl bei Tageslicht als auch bei Dunkelheit sicher erkannt werden.

Analog können die Kriterien zum Erkennen für andere Objektklassen je nach Situation angepasst werden.

Es wird ein Verfahren zum und Steuergerät Erkennen eines Objekts in einer Bildinformation vorgestellt wie definiert in Ansprüche 1 und 6.

Unter einer Bildinformation können elektronische Bilddaten verstanden werden. Die Bildinformation kann aus einer Vielzahl von Intensitätsinformationen von rasterförmig angeordneten Bildpunkten bestehen. Die Bildinformation kann ein Abbild einer realen Szene repräsentieren. Die Szene kann dabei eine perspektivische Ansicht eines Ausschnitts einer realen Umgebung sein. Der Ausschnitt kann zumindest ein Teilbereich des Erfassungsbereichs der Kamera sein. Ein Objekt kann ein Gegenstand sein, der in der Bildinformation zumindest teilweise erkennbar repräsentiert ist. Eine Situation kann eine Rahmenbedingung charakterisieren, zu der die Bildinformation erfasst wird. Eine Objektklasse kann ein Überbegriff bzw. Sammelbegriff für ähnliche Objekte sein. Wesentliche Merkmale der Objekte einer Objektklasse können innerhalb eines Toleranzbereichs übereinstimmen. Eine Merkmalskombination kann eine Mehrzahl der Merkmale umfassen, die die Objektklasse charakterisieren. Für die jeweilige Situation kann eine angepasste Merkmalskombination bereitgestellt sein. Zwei Merkmalskombinationen für verschiedene Situationen können sich zumindest in einem Merkmal voneinander unterscheiden. Die Objektklasse kann situationsbezogen ausgewählt werden. In mehreren Durchläufen kann in der Bildinformation nach Objekten verschiedener Objektklassen gesucht werden.

Im Schritt des Einlesens kann ein Integralbild als Bildinformation eingelesen werden. Das Integralbild kann eine zeilenweise und/oder spaltenweise Integration von Helligkeitswerten von Bildpunkten eines Kamerabilds der Szene repräsentieren. Bei einem Integralbild ergeben sich von Bildpunkt zu benachbartem Bildpunkt in eine Richtung nur aufsteigende Helligkeitswerte und in die entgegengesetzte Richtung nur abfallende Helligkeitswerte. Dadurch können im Schritt des Suchens vereinfachte Verarbeitungsvorschriften verwendet werden, wodurch Zeit zum Suchen eingespart werden kann.

Im Schritt des Suchens kann in einem ersten Suchschritt ein erstes Merkmal aus der Merkmalskombination zum Überprüfen verwendet werden. Nachfolgend kann in zumindest einem weiteren Suchschritt zumindest ein weiteres Merkmal aus der Merkmalskombination zum Überprüfen verwendet werden. Die Suche nach einem einzelnen Merkmal kann durch eine vereinfachte Verarbeitungsvorschrift durchgeführt werden, wodurch Zeit zum Suchen eingespart werden kann.

Das weitere Merkmal zum Überprüfen kann in dem weiteren Suchschritt unter Verwendung eines Ergebnisses des vorhergehenden Suchschritts aus der Merkmalskombination ausgewählt werden. Die Merkmale können aufeinander aufbauend ausgewählt werden. Beispielsweise kann ein bestimmtes Merkmal ein anderes Merkmal ausschließen, weshalb das andere Merkmal nicht mehr überprüft zu werden braucht. Dadurch kann Zeit zum Suchen eingespart werden.

Es kann eine Erkennungswahrscheinlichkeit für das Objekt bereitgestellt werden. Dabei kann eine umso größere Erkennungswahrscheinlichkeit bereitgestellt werden, je mehr Merkmale der Merkmalskombination in der Bildinformation erkennbar sind. Durch eine Erkennungswahrscheinlichkeit kann auch auf unvollständig erkennbare Objekte reagiert werden. Beispielsweise können so teilweise verdeckte Objekte erkannt werden, auch wenn nicht alle Merkmale der Merkmalskombination erkannt werden können. Dann können auch mehrere Objektklassen auf das Objekt zutreffen und die Auswahl an möglichen Objektklassen eingeschränkt werden.

Bildpunkte der Bildinformation können als das Objekt gekennzeichnet werden, wenn in den Bildpunkten eine Mindestanzahl von Merkmalen der Merkmalskombination erkannt wird. Die Bildpunkte können als wahrscheinlich erkanntes Objekt markiert werden. Das wahrscheinlich erkannte Objekt kann in einer nachfolgenden Bildinformation erneut gesucht werden. Dadurch kann eine Detailsuche auf einen Teilbereich der Bildinformation beschränkt werden.

Das Verfahren kann einen Schritt des Erkennens der Situation aufweisen, wobei die Situation unter Verwendung der Szene in der Bildinformation und/oder Fahrzeugdaten und/oder Umweltbedingungen erkannt wird. Durch das Erkennen der Situation in der Bildinformation kann das Verfahren auch ohne eigenen Sensor für die Situation ausgeführt werden.

Es kann ferner eine Klasseninformation der zu erkennenden Objektklasse eingelesen werden. Im Schritt des Auswählens kann unter Verwendung der Klasseninformation aus einer Mehrzahl von verschiedenen Merkmalskombinationen die, die Objektklasse repräsentierende Merkmalskombination ausgewählt werden. Die Objektsuche kann gezielt auf zumindest eine Objektklasse beschränkt werden, wenn andere Objektklassen nicht von Interesse sind. Dadurch kann das Verfahren beschleunigt werden.

Die Merkmalskombination kann eine Information über zumindest eine Flächensumme des zu erkennenden Objekts umfassen. Dadurch kann das Verfahren schnell und sicher ausgeführt werden.

Es wird ein Steuergerät zum Erkennen eines Objekts in einer Bildinformation vorgestellt, wobei die Bildinformation eine Szene in einem Erfassungsbereich einer Kamera während einer Situation repräsentiert, wobei das Steuergerät die folgenden Merkmale aufweist:
eine Schnittstelle zum Einlesen der Bildinformation und zumindest eines, die Situation repräsentierenden Parameters;
eine Einrichtung zum Auswählen einer, in der Situation erwartbar erkennbaren Merkmalskombination einer Objektklasse des Objekts unter Verwendung des Parameters; und
eine Einrichtung zum Suchen der Merkmalskombination in der Bildinformation, um das Objekt zu erkennen.

Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Fahrzeugs mit einem Steuergerät zum Erkennen eines Objekts in einer Bildinformation gemäß einem Ausführungsbeispiel der vorliegenden Erfindung;
- Fig. 2: eine grafische Darstellung eines Verfahrensablaufs zum Erkennen eines Objekts in einer Bildinformation gemäß einem Ausführungsbeispiel der vorliegenden Erfindung;
- Fig. 3: ein Blockschaltbild eines Steuergeräts zum Erkennen eines Objekts in einer Bildinformation gemäß einem Ausführungsbeispiel der vorliegenden Erfindung; und
- Fig. 4: ein Ablaufdiagramm eines Verfahrens zum Erkennen eines Objekts in einer Bildinformation gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

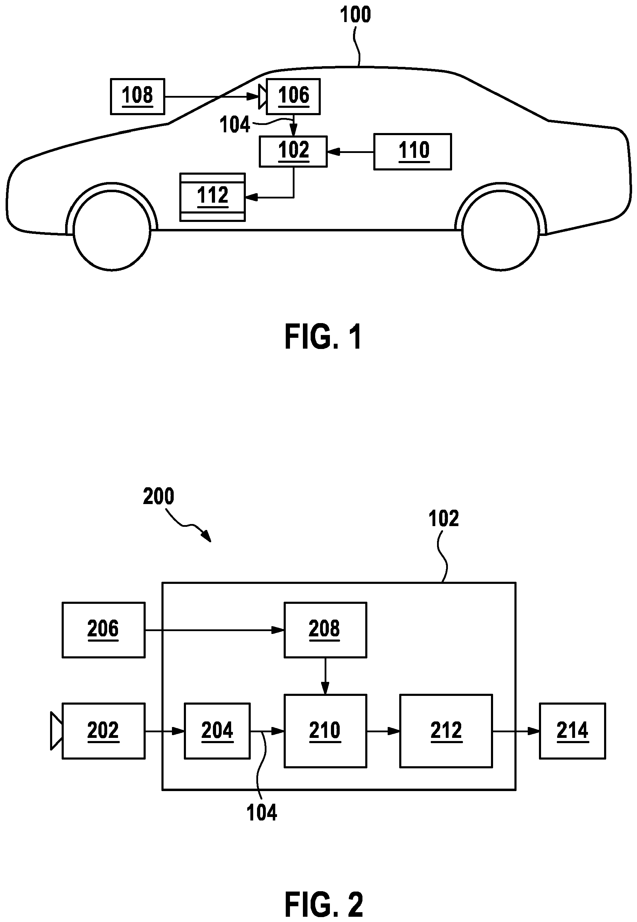

Fig. 1 zeigt eine Darstellung eines Fahrzeugs 100 mit einem Steuergerät 102 zum Erkennen eines Objekts in einer Bildinformation 104 gemäß einem Ausführungsbeispiel der vorliegenden Erfindung. Die Bildinformation 104 wird von einer Kamera 106 generiert, die hier in dem Fahrzeug 100 verbaut ist und auf einen Erfassungsbereich vordem Fahrzeug 100 gerichtet ist. Die Kamera 106 ist dazu ausgebildet, eine Szene 108 in dem Erfassungsbereich in der Bildinformation 104 abzubilden. Das Steuergerät 102 weist eine Schnittstelle für die Bildinformation 104 und eine Schnittstelle für zumindest einen Parameter 110 auf. Der Parameter 110 repräsentiert eine Situation, in der die Kamera 106 die Szene 108 erfasst.

In einem Ausführungsbeispiel ist der Parameter 110 eine Fahrzeuggeschwindigkeit.

In einem Ausführungsbeispiel ist der Parameter 110 eine Beleuchtungsstärke.

In einem Ausführungsbeispiel ist der Parameter 110 ein Witterungsverhältnis.

Das Steuergerät 102 ist dazu ausgebildet, das Objekt unter Verwendung des Parameters 110 zu erkennen. Dazu wählt das Steuergerät 102 aus einer Reihe unterschiedlicher Merkmalskombinationen einer zu erkennenden Objektklasse eine Merkmalskombination aus, die am Besten zu dem Parameter 110 passt. Dadurch können beispielsweise bei Dunkelheit andere Merkmale zur Objekterkennung herangezogen werden, als bei Tageslicht. Ebenso kann das Objekt bei Regen ein anderes Erscheinungsbild aufweisen, als bei Sonnenschein. Durch eine Konzentration auf die jeweils am Besten geeigneten Merkmale wird eine sichere Objekterkennung ermöglicht. Eine Position des erkannten Objekts in der Szene 108 wird an andere Fahrzeugsteuergeräte 112 zur weiteren Verwendung weitergegeben.

In einem Ausführungsbeispiel ist das Steuergerät 102 in einem Bordcomputer des Fahrzeugs 100 umgesetzt.

In einem Ausführungsbeispiel ist das Steuergerät 102 in einem Kamera-Steuergerät des Fahrzeugs 100 umgesetzt.

In einem Ausführungsbeispiel ist das Steuergerät 102 in einem Navigationssteuergerät des Fahrzeugs 100 umgesetzt.

Die Bildinformation 104 der Szene 108 mit Objekten vor dem Kamerasystem 106 wird über eine Datenschnittstelle eingelesen. Über die Schnittstelle werden als Parameter 110 auch Fahrzeug- und Systemdaten, wie eine Geschwindigkeit des Fahrzeugs 100 eingelesen.

Mit anderen Worten zeigt Fig. 1 gemäß einem Ausführungsbeispiel eine Nutzung von FPGA (Field Programmable Gate Array) basierten gewichteten Flächensummen zur Objekterkennung in Videobildern.

Objekte in Kameraaufnahmen können aus der Kombination von Summen über Flächen und deren linearen Verknüpfungen erkannt werden. Diese Objekterkenner können mit Hilfe von Lernverfahren trainiert werden, um eine gute Erkennungsrate bei geringer Fehlalarmrate zu erreichen. Der hier vorgestellte Ansatz reduziert die rechnerische Komplexität dieser Verfahren, verbessert ihre Eignung für den Einsatz bei Echtzeit-Fahrerassistenzsystemen (FAS) und ermöglicht eine hohe Verarbeitungsgeschwindigkeit sowie eine zeitnahe Reaktion auf Objekte aus der realen Welt.

Der hier vorgestellte Ansatz stellt ein Verfahren für FPGAs 102 vor, welches die Objekterkennungsaufgabe in Echtzeit erfüllen kann und somit erst ihren Einsatz im automobilen FAS-Umfeld ermöglicht.

Dazu werden hier spezialisierte Flächen-Summen-Features und eine FPGAbasierte Verarbeitungseinheit 102 für diese Features vorgestellt, die eine Echtzeit-Objekterkennung ermöglichen. Der große Vorteil der vorgeschlagenen Lösung ist ihre Nachladbarkeit zur Laufzeit, was eine situationsabhängige Erkennung von Objekten erlaubt, z. B. Umschaltung bei Änderung der Witterungs- oder Beleuchtungsverhältnisse.

Das Kamera-System 106 ist im Fahrzeug 100 angebracht und nimmt die aktuelle Szene 108 vor dem Fahrzeug 100 auf. Dabei kann das Kamerasystem 106 einen oder mehrere Kamerasensoren aufweisen. Über eine Schnittstelle, die drahtgebunden oder drahtlos ausgeführt sein kann, überträgt das System seine Bilddaten 104 an einen oder mehrere Recheneinheiten 102 mit eingebautem FPGA. Beispielsweise kann der FPGA auch im Bordcomputer 112, dem Kombi-Instrument 112, dem Kamera-Steuergerät 112 und/oder dem Navigationssystem 112 integriert sein.

Fig. 2 zeigt eine grafische Darstellung eines Verfahrensablaufs 200 zum Erkennen eines Objekts in einer Bildinformation 104 gemäß einem Ausführungsbeispiel der vorliegenden Erfindung. Der Verfahrensablauf 200 kann auf einem Steuergerät 102, wie es in Fig. 1 dargestellt ist, ausgeführt werden. In dem Verfahren gemäß einem Ausführungsbeispiel der vorliegenden Erfindung wird hier aus einem Eingangsbild 202 durch eine Integralbildgenerierung 204 die Bildinformation 104 aufbereitet. Feature- bzw. Merkmalsbeschreibungen 206 werden in einen Speicher 208 des Steuergeräts 102 hinterlegt. Hier ist der Speicher 208 ein FPGA interner Speicher 208. Für eine Feature- bzw. Merkmalsberechnung 210 werden auf die Bildinformation 104 und die Merkmalsbeschreibungen 206 aus dem Speicher 208 zugegriffen. Über eine Kaskadierung und Verknüpfung 212 werden die Ergebnisse der Merkmalsberechnung 210 überprüft und als Ergebnisse 214 ausgegeben, wenn die Überprüfung 212 erfolgreich ist.

In einem Ausführungsbeispiel erfolgt die Datenverarbeitung auf dem FPGA 102 wie in Fig. 2 als Blockdiagramm dargestellt. Die Beschreibung 206 der Flächensummen-Features wird in den internen Speicher 208 des FPGA 102 geladen. Das Eingangsbild 202 des Kamera-Systems wird in das FPGA 102 eingelesen. Ein Zeilen-Spalten-Summenbild (Integralbild) 104 wird generiert 204. Für die Feature-Berechnung 210 werden die im FPGA 102 gespeicherten Feature-Beschreibungen 206 auf die Daten des Summenbildes 104 angewendet. Die Ergebnisse der Feature-Berechnungen 210 werden verknüpft und anschließend kaskadiert 212. Auf diese Weise kann für jede Bildposition eine Antwort 214 geliefert werden, ob ein Objekt vorhanden ist oder nicht. Die Ergebnisse 214 der Analyse werden zur weiteren Verarbeitung ausgegeben.

In einem Ausführungsbeispiel werden die Feature-Beschreibungen 206 vor der Verarbeitung eines Bildes 104 in den FPGA-internen Speicher 208 geschrieben. Die Feature-Beschreibungen 206 sind vor ihrem Einsatz auf dem FPGA 102 auf bestimmte Objekte trainiert worden. Um in aufeinanderfolgenden Bildern 104 verschiedene Objektklassen detektieren zu können, ist es möglich, vor jedem neuen Bild 104 die Feature-Beschreibungen 206 ebenfalls neu in den FPGA-internen Speicher 208 zu schreiben.

In einem Ausführungsbeispiel wird das Zeilen-Spalten-Summenbild (Integralbild) 104 basierend auf dem Eingangsbild 202 berechnet und ermöglicht aufgrund seiner Eigenschaften in der folgenden Verarbeitung 210 eine vereinfachte Berechnungsgrundlage.

In einem Ausführungsbeispiel analysiert die Feature-Berechnung 210 die im FPGA-internen Speicher 208 abgelegten Feature-Beschreibungen 206 und extrahiert die charakterisierten Features aus dem Zeilen-Spalten-Summenbild (Integralbild) 104.

In einem Ausführungsbeispiel ist die Verknüpfung 212 der zuvor berechneten Features durch die Feature-Beschreibungen 206 im FPGA-internen Speicher 208 festgelegt. Durch die Verknüpfung 212 der Features wird eine Baumstruktur aufgebaut, die stufenweise zusammengefasst und kaskadiert ist. Nach jeder Stufe wird entschieden, ob die Kaskade fortgesetzt oder abgebrochen wird. Wenn alle Stufen der Kaskade erfolgreich durchlaufen sind, dann befindet sich an der aktuellen Position ein mögliches Objekt. Die Hardware-Klassifikation wird für jede Pixelposition des Eingangsbildes gerechnet und somit wird für jede Pixelposition bestimmt, ob ein mögliches Objekt vorliegt oder nicht. Auflösungsverluste durch Filtermatrizen werden berücksichtigt.

In einem Ausführungsbeispiel ist unter einer Feature-Beschreibung 206 bildlich gesprochen eine Tabelle zu verstehen, die in der ersten Spalte eine laufende Nummer zur Unterscheidung unterschiedlicher Merkmale für eine Klassifikation aufweist. In den folgenden Spalten weist diese Tabelle dann Werte für Merkmalsvergleiche auf, die ein teilweises oder vollständiges Erkennen eines Objekts in einem Bild 104 ermöglichen. Die abschließende Spalte weist dann eine Anweisung zur Weiterverarbeitung auf. Diese Anweisung kann beispielsweise eine neue Zeile der Spalte sein oder auch eine Ausgabe des Ergebnisses.

In einem Ausführungsbeispiel wird unter einem Integral-Bild 104 ein Bild verstanden, das auf Basis eines von einer Kamera aufgenommenen Bildes 202 berechnet wird. Dabei wird der Pixelwert des Integralbilds 104 in Abhängigkeit aller darüber und zu seiner Linken liegenden Pixelwerte gebildet. Hieraus ergibt sich, dass der Pixelwert im rechten unteren Pixel ein Durchschnitt über alle Pixelwerte des Bildes ist. Weiter ergibt sich, dass der Pixelwert des linken oberen Pixels dem des ursprünglichen Bildes 202 entspricht.

Die in dem hier vorgestellten Ansatz als Feature-Beschreibungen 206 bezeichneten Elemente können während einer Laufzeit des PGAs ausgetauscht werden. Dies kann wiederum vorteilhafterweise von externen Parametern, wie beispielsweise von Witterungsverhältnissen/- oder Beleuchtungsverhältnissen abhängig gemacht werden.

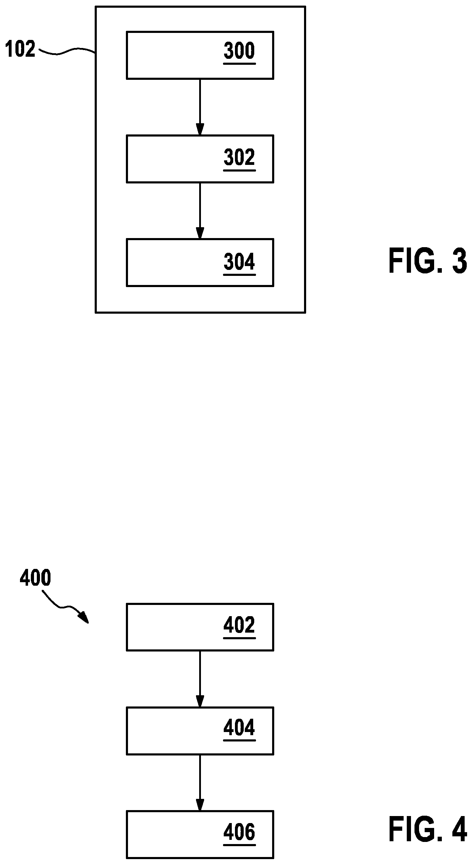

Fig. 3 zeigt ein Blockschaltbild eines Steuergeräts 102 zum Erkennen eines Objekts in einer Bildinformation gemäß einem Ausführungsbeispiel der vorliegenden Erfindung. Das Steuergerät 102 weist eine Schnittstelle 300 zum Einlesen, eine Einrichtung 302 zum Auswählen und eine Einrichtung 304 zum Suchen auf. Dabei repräsentiert die Bildinformation eine Szene in einem Erfassungsbereich einer Kamera während einer Situation. Die Schnittstelle 300 ist dazu ausgebildet, die Bildinformation und zumindest einen, die Situation repräsentierenden Parameter einzulesen. Die Einrichtung 302 zum Auswählen ist dazu ausgebildet, eine in der Situation erwartbar erkennbare Merkmalskombination einer Objektklasse des Objekts unter Verwendung des Parameters auszuwählen. Die Einrichtung 304 zum Suchen ist dazu ausgebildet, die Merkmalskombination in der Bildinformation zu suchen, um das Objekt zu erkennen.

Insbesondere ist das Steuergerät 102 dazu ausgebildet, in einem Fahrzeug, wie es in Fig. 1 abgebildet ist, verwendet zu werden.

Fig. 4 zeigt ein Ablaufdiagramm eines Verfahrens 400 zum Erkennen eines Objekts in einer Bildinformation gemäß einem Ausführungsbeispiel der vorliegenden Erfindung. Das Verfahren 400 weist einen Schritt 402 des Einlesens, einen Schritt 404 des Auswählens und einen Schritt 406 des Suchens auf. Die Bildinformation repräsentiert eine Szene in einem Erfassungsbereich einer Kamera während einer Situation. Im Schritt 402 des Einlesens werden die Bildinformation und zumindest ein, die Situation repräsentierender Parameter eingelesen. Im Schritt 404 des Auswählens wird eine, in der Situation erwartbar erkennbare Merkmalskombination einer Objektklasse des Objekts unter Verwendung des Parameters ausgewählt. Im Schritt 406 des Suchens wird die Merkmalskombination in der Bildinformation gesucht, um das Objekt zu erkennen.

In einem Ausführungsbeispiel wird im Schritt 402 des Einlesens ein Integralbild als Bildinformation eingelesen. Dabei repräsentiert das Integralbild eine zeilenweise und/oder spaltenweise Integration von Helligkeitswerten von Bildpunkten eines Kamerabilds der Szene.

In einem Ausführungsbeispiel wird im Schritt 406 des Suchens in einem ersten Suchschritt ein erstes Merkmal aus der Merkmalskombination zum Überprüfen verwendet. Nachfolgend wird in zumindest einem weiteren Suchschritt zumindest ein weiteres Merkmal aus der Merkmalskombination zum Überprüfen verwendet.

In einem Ausführungsbeispiel wird das weitere Merkmal zum Überprüfen in dem weiteren Suchschritt unter Verwendung eines Ergebnisses des vorhergehenden Suchschritts aus der Merkmalskombination ausgewählt.

In einem Ausführungsbeispiel wird im Schritt 406 des Suchens eine Erkennungswahrscheinlichkeit für das Objekt bereitgestellt. Dabei wird eine umso größere Erkennungswahrscheinlichkeit bereitgestellt, je mehr Merkmale der Merkmalskombination in der Bildinformation erkennbar sind.

In einem Ausführungsbeispiel werden im Schritt 406 des Suchens Bildpunkte der Bildinformation als das Objekt gekennzeichnet, wenn in den Bildpunkten eine Mindestanzahl von Merkmalen der Merkmalskombination erkannt wird.

In einem Ausführungsbeispiel weist das Verfahren einen Schritt des Erkennens der Situation auf. Dabei wird die Situation unter Verwendung der Szene in der Bildinformation und/oder Fahrzeugdaten und/oder Umweltbedingungen erkannt.

In einem Ausführungsbeispiel wird im Schritt 402 des Einlesens ferner eine Klasseninformation der zu erkennenden Objektklasse eingelesen. Im Schritt 404 des Auswählens wird aus einer Mehrzahl von verschiedenen Merkmalskombinationen unter Verwendung der Klasseninformation die, die Objektklasse repräsentierende Merkmalskombination ausgewählt.

In einem Ausführungsbeispiel umfasst die Merkmalskombination eine Information über zumindest eine Flächensumme des zu erkennenden Objekts.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Erkennen eines Objekts in einer Bildinformation (104), wobei die Bildinformation (104) eine Szene (108) in einem Erfassungsbereich einer Kamera (106) während einer Situation repräsentiert, die eine Rahmenbedingung charakterisiert, zu der die Bildinformation erfasst wird, wobei das Verfahren (400) von einem Steuergerät (102) ausgeführt wird und die folgenden Schritte aufweist:
Erkennen der Situation unter Verwendung der Szene (108) in der Bildinformation (104);
Einlesen (402) der Bildinformation (104) und zumindest eines, die Situation repräsentierenden Parameters (110), wobei ein Integralbild (104) als Bildinformation (104) eingelesen wird, wobei das Integralbild (104) eine zeilenweise und/oder spaltenweise Integration von Helligkeitswerten von Bildpunkten eines Kamerabilds (204) der Szene (108) repräsentiert;
Auswählen (404) einer, in der Situation erwartbar erkennbaren Merkmalskombination einer Objektklasse des Objekts unter Verwendung des Parameters (110), wobei die Merkmalskombination einer Beschreibung der Flächensummen-Features des zu erkennenden Objekts umfasst und vor einer Verarbeitung der Bildinformation (104) über eine Schnittstelle des Steuergeräts (102) in einen internen Speicher (208) des Steuergeräts (102) geladen wird; und
Suchen (406) der Merkmalskombination in der Bildinformation (104), um das Objekt zu erkennen, wobei im Schritt (406) des Suchens in einem ersten Suchschritt ein erstes Merkmal aus der Merkmalskombination zum Überprüfen verwendet wird und nachfolgend in zumindest einem weiteren Suchschritt zumindest ein weiteres Merkmal aus der Merkmalskombination zum Überprüfen verwendet wird, wobei das weitere Merkmal zum Überprüfen in dem weiteren Suchschritt unter Verwendung eines Ergebnisses des vorhergehenden Suchschritts aus der Merkmalskombination ausgewählt wird.

2. Verfahren (400) gemäß Anspruch 1, bei dem im Schritt (406) des Suchens eine Erkennungswahrscheinlichkeit für das Objekt bereitgestellt wird, wobei eine umso größere Erkennungswahrscheinlichkeit bereitgestellt wird, je mehr Merkmale der Merkmalskombination in der Bildinformation (104) erkennbar sind.

3. Verfahren (400) gemäß einem der vorangegangenen Ansprüche, bei dem im Schritt (406) des Suchens Bildpunkte der Bildinformation (104) als das Objekt gekennzeichnet werden, wenn in den Bildpunkten eine Mindestanzahl von Merkmalen der Merkmalskombination erkannt wird.

4. Verfahren (400) gemäß einem der vorangegangenen Ansprüche, bei dem die Situation unter Verwendung von Fahrzeugdaten (110) und/oder Umweltbedingungen (110) erkannt wird.

5. Verfahren (400) gemäß einem der vorangegangenen Ansprüche, bei dem im Schritt (402) des Einlesens ferner eine Klasseninformation der zu erkennenden Objektklasse eingelesen wird, und im Schritt (404) des Auswählens unter Verwendung der Klasseninformation aus einer Mehrzahl von verschiedenen Merkmalskombinationen, die, die Objektklasse repräsentierende Merkmalskombination ausgewählt wird.

6. Steuergerät (102) zum Erkennen eines Objekts in einer Bildinformation (104), wobei die Bildinformation (104) eine Szene (108) in einem Erfassungsbereich einer Kamera (106) während einer Situation repräsentiert, die eine Rahmenbedingung charakterisiert, zu der die Bildinformation erfasst wird, wobei das Steuergerät (102) die folgenden Merkmale aufweist:
eine Einrichtung zum Erkennen der Situation unter Verwendung der Szene (108) in der Bildinformation (104);
eine Schnittstelle (300) zum Einlesen der Bildinformation (104) und zumindest eines, die Situation repräsentierenden Parameters (110), wobei ein Integralbild (104) als Bildinformation (104) eingelesen wird, wobei das Integralbild (104) eine zeilenweise und/oder spaltenweise Integration von Helligkeitswerten von Bildpunkten eines Kamerabilds (204) der Szene (108) repräsentiert;
eine Einrichtung (302) zum Auswählen einer, in der Situation erwartbar erkennbaren Merkmalskombination einer Objektklasse des Objekts unter Verwendung des Parameters (110), wobei die Merkmalskombination einer Beschreibung der Flächensummen-Features des zu erkennenden Objekts umfasst und vor einer Verarbeitung der Bildinformation (104) über eine Schnittstelle des Steuergeräts (102) in einen internen Speicher (208) des Steuergeräts (102) geladen wird; und
eine Einrichtung (304) zum Suchen der Merkmalskombination in der Bildinformation (104), um das Objekt zu erkennen, wobei die Einrichtung (304) ausgebildet ist, um in einem ersten Suchschritt ein erstes Merkmal aus der Merkmalskombination zum Überprüfen zu verwenden und nachfolgend in zumindest einem weiteren Suchschritt zumindest ein weiteres Merkmal aus der Merkmalskombination zum Überprüfen zu verwenden, wobei das weitere Merkmal zum Überprüfen in dem weiteren Suchschritt unter Verwendung eines Ergebnisses des vorhergehenden Suchschritts aus der Merkmalskombination ausgewählt wird.

7. Computer-Programmprodukt mit Programmcode zur Durchführung des Verfahrens nach einem der Ansprüche 1 bis 5, wenn das Programmprodukt auf einer Vorrichtung ausgeführt wird.

## Claims

1. Method (400) for recognizing an object in image information (104) wherein the image information (104) represents a scene (108) in a detection region of a camera (106) during a situation which characterizes a boundary condition with respect to which the image information is detected, wherein the method (400) is carried out by a control unit (102) and comprises the following steps:
recognizing the situation using the scene (108) in image information (104);
reading in (402) the image information (104) and at least one parameter (110) representing the situation, wherein an integral image (104) is read in as image information (104), wherein the integral image (104) represents a line-by-line and/or column-by-column integration of brightness values of pixels of a camera image (204) of the scene (108);
selecting (404) a feature combination - expectably recognizable in the situation - of an object class of the object using the parameter (110), wherein the feature combination comprises a description of the area sum features of the object to be recognized and is loaded into an internal memory (208) of the control unit (102) via an interface of the control unit (102) before the image information (104) is processed; and
searching (406) for the feature combination in the image information (104) in order to recognize the object, wherein,.in step (406) of searching, a first search step involves using a first feature from the feature combination for the purpose of checking and subsequently at least one further search step involves using at least one further feature from the feature combination for the purpose of checking,
wherein the further feature for the purpose of checking in the further search step is selected from the feature combination using a result of the preceding search step.

2. Method (400) according to Claim 1, wherein step (406) of searching involves providing a recognition probability for the object, wherein a recognition probability is provided which is all the greater, the more features of the feature combination are recognizable in the image information (104).

3. Method (400) according to either of the preceding claims, wherein step (406) of searching involves identifying pixels of the image information (104) as the object if a minimum number of features of the feature combination is recognized in the pixels.

4. Method (400) according to any of the preceding claims, wherein the situation is recognized using vehicle data (110) and/or environmental conditions (110).

5. Method (400) according to any of the preceding claims, wherein step (402) of reading in furthermore involves reading in class information of the object class to be recognized, and step (404) of selecting involves selecting the feature combination representing the object class from a plurality of different feature combinations using the class information.

6. Control unit (102) for recognizing an object in image information (104), wherein the image information (104) represents a scene (108) in a detection region of a camera (106) during a situation which characterizes a boundary condition with respect to which the image information is detected, wherein the control unit (102) comprises the following features:
a device for recognizing the situation using the scene (108) in the image information (104);
an interface (300) for reading in the image information (104) and at least one parameter (110) representing the situation, wherein an integral image (104) is read in as image information (104), wherein the integral image (104) represents a line-by-line and/or column-by-column integration of brightness values of pixels of a camera image (204) of the scene (108);
a device (302) for selecting a feature combination - expectably recognizable in the situation - of an object class of the object using the parameter (110), wherein the feature combination comprises a description of the area sum features of the object to be recognized and is loaded into an internal memory (208) of the control unit (102) via an interface of the control unit (102) before the image information (104) is processed; and
a device (304) for searching for the feature combination in the image information (104) in order to recognize the object, wherein the device (304) is configured, in a first search step, to use a first feature from the feature combination for the purpose of checking and subsequently, in at least one further search step, to use at least one further feature from the feature combination for the purpose of checking, wherein the further feature for the purpose of checking in the further search step is selected from the feature combination using a result of the preceding search step.

7. Computer program product having program code for carrying out the method according to any of Claims 1 to 5 when the program product is executed on an apparatus.

## Revendications

1. Procédé (400) pour la reconnaissance d'un objet dans une information d'image (104), dans lequel l'information d'image (104) représente une scène (108) dans une zone de détection d'une caméra (106) pendant une situation qui caractérise une condition générale pour laquelle l'information d'image est détectée, le procédé (400) étant mis en oeuvre par un appareil de commande (102) et présente les étapes suivantes :
la reconnaissance de la situation en utilisant la scène (108) dans l'information d'image (104) ;
la lecture (402) de l'information d'image (104) et d'au moins un paramètre (110) représentant la situation, dans lequel une image intégrale (104) est lue en tant qu'information d'image (104), dans lequel l'image intégrale (104) représente une intégration ligne par ligne et/ou colonne par colonne de valeurs de luminosité de points d'image d'une image de caméra (204) de la scène (108) ;
la sélection (404) d'une combinaison de caractéristiques reconnaissable, prévisible dans la situation, d'une classe d'objets de l'objet en utilisant le paramètre (110), dans lequel la combinaison de caractéristiques comprend une description des caractéristiques de totaux de surfaces de l'objet à reconnaître et est chargée avant un traitement de l'information d'image (104) via une interface de l'appareil de commande (102) dans une mémoire interne (208) de l'appareil de commande (102) ; et
la recherche (406) de la combinaison de caractéristiques dans l'information d'image (104) pour reconnaître l'objet, dans lequel, à l'étape (406) de recherche, dans une première étape de recherche, on utilise une première caractéristique de la combinaison de caractéristiques pour la vérification et ensuite, dans au moins une autre étape de recherche, on utilise au moins une autre caractéristique de la combinaison de caractéristiques pour la vérification, dans lequel l'autre caractéristique pour la vérification dans une autre étape de recherche est sélectionnée dans la combinaison de caractéristiques en utilisant un résultat de l'étape de recherche précédente.

2. Procédé (400) selon la revendication 1, dans lequel, à l'étape (406) de recherche, une probabilité de reconnaissance pour l'objet est mise à disposition, dans lequel on met à disposition une probabilité de reconnaissance d'autant plus élevée que le nombre de caractéristiques de la combinaison de caractéristiques reconnaissables dans l'information d'image (104) est grand.

3. Procédé (400) selon l'une des revendications précédentes, dans lequel, à l'étape (406) de recherche, des points d'image de l'information d'image (104) sont identifiés en tant que l'objet si l'on reconnaît dans les points d'image un nombre minimal de caractéristiques de la combinaison de caractéristiques.

4. Procédé (400) selon l'une des revendications précédentes, dans lequel la situation est reconnue en utilisant des données de véhicule (110) et/ou des conditions environnementales (110).

5. Procédé (400) selon l'une des revendications précédentes, dans lequel, .dans l'étape (402) de lecture, on lit en outre une information de classe de la classe d'objets à reconnaître, et à l'étape (404) de sélection, en utilisant l'information de classe, on sélectionne, à partir d'une pluralité de différentes combinaisons de caractéristiques, la combinaison de caractéristiques représentant la classe d'objets.

6. Appareil de commande (102) pour la reconnaissance d'un objet dans une information d'image (104), dans lequel l'information d'image (104) représente une scène (108) dans une zone de détection d'une caméra (106) pendant une situation, laquelle caractérise une condition générale, pour laquelle l'information d'image est détectée, l'appareil de commande (102) présentant les caractéristiques suivantes :
un dispositif pour la reconnaissance de la situation en utilisant la scène (108) dans l'information d'image (104) ;
une interface (300) pour la lecture de l'information d'image (104) et d'au moins un paramètre (110) représentant la situation, dans lequel une image intégrale (104) est lue en tant qu'information d'image (104), dans lequel l'image intégrale (104) représente une intégration ligne par ligne et/ou colonne par colonne de valeurs de luminosité de points d'image d'une image de caméra (204) de la scène (108) ;
un dispositif (302) pour la sélection d'une combinaison de caractéristiques reconnaissable, prévisible dans la situation, d'une classe d'objets de l'objet en utilisant le paramètre (110), dans lequel la combinaison de caractéristiques comprend une description des caractéristiques de totaux de surfaces de l'objet à reconnaître et est chargée avant un traitement de l'information d'image (104) via une interface de l'appareil de commande (102) dans une mémoire interne (208) de l'appareil de commande (102) ; et
un dispositif (304) pour la recherche de la combinaison de caractéristiques dans l'information d'image (104) pour reconnaître l'objet, dans lequel le dispositif (304) est réalisé, dans une première étape de recherche, pour utiliser une première caractéristique de la combinaison de caractéristiques pour la vérification et ensuite, dans au moins une autre étape de recherche, pour utiliser au moins une autre caractéristique de la combinaison de caractéristiques pour la vérification, dans lequel l'autre caractéristique pour la vérification dans l'autre étape de recherche est sélectionnée, en utilisant un résultat de l'étape de recherche précédente, à partir de la combinaison de caractéristiques.

7. Produit de programme informatique avec des codes de programme pour la mise en oeuvre du procédé selon l'une des revendications 1 à 5 lorsque le produit de programme est exécuté sur un dispositif.
